# EUROPÄISCHE PATENTSCHRIFT

(11) **EP 3 643 019 B1**
(45) Veröffentlichungstag und Bekanntmachung des Hinweises auf die Patenterteilung: **05.05.2021**
(21) Anmeldenummer: 18759314.0
(22) Anmeldetag: 24.08.2018
(51) Int. Cl.: H04L 12/28, H04L 29/06, H04L 29/12, H04L 12/18, H04L 29/08, H04L 12/46, H05B 47/18

(54) **KOMMUNIKATIONSMODUL UND BELEUCHTUNGS-BUSSYSTEM MIT NETZWERKSCHNITTSTELLE**
COMMUNICATION MODULE AND LIGHTING BUS SYSTEM HAVING A NETWORK INTERFACE
MODULE DE COMMUNICATION ET SYSTÈME DE BUS D'ÉCLAIRAGE POURVU D'UNE INTERFACE RÉSEAU

(30) Priorität: 30.08.2017 DE 102017215125
(43) Veröffentlichungstag der Anmeldung: 29.04.2020
(73) Patentinhaber: Tridonic GmbH & Co. KG, 6851 Dornbirn (AT)
(72) Erfinder: ENDER, Markus, 6844 Altach (AT); LOCHMANN, Frank, 88147 Achberg (DE); SEVERIN, Dieter, 6890 Lustenau (AT)
(74) Vertreter: Beder, Jens
(86) Internationale Anmeldenummer: PCT/EP2018/072899
(87) Internationale Veröffentlichungsnummer: WO 2019/042891

(56) Entgegenhaltungen:
- DE-A1-102005 034 972
- SEIFRIED STEFAN ET AL: "KNX IPv6: Design issues and proposed architecture", 2017 IEEE 13TH INTERNATIONAL WORKSHOP ON FACTORY COMMUNICATION SYSTEMS (WFCS), IEEE, 31. Mai 2017 (2017-05-31), Seiten 1-10, XP033129114, DOI: 10.1109/WFCS.2017.7991951 [gefunden am 2017-07-25]
- Mdt Technologies Gmbh: "Technical Manual MDT DaliControl IP Gateway w/ Webinterface", , 1. Mai 2013 (2013-05-01), Seiten 1-99, XP055512364, 51766 Engelskirchen - Papiermühle 1 Gefunden im Internet: URL:https://www.mdt.de/download/MDT_TM_Dal iController_02.pdf [gefunden am 2018-10-04]

## Beschreibung

Die vorliegende Erfindung betrifft ein Kommunikationsmodul, ein Beleuchtungs-Bussystem und ein Verfahren zum Verbinden eines Beleuchtungs-Bussystems mit einem auf dem Internetprotokoll basierenden Netzwerk.

In der Gebäudetechnik können Beleuchtungssysteme Komponenten wie Sensoren, Leuchten, Betriebsgeräte, Aktoren, Schalter und Dimmer aufweisen, welche über ein Bussystem miteinander verbunden sind.

Bei einem Beleuchtungssystem gemäß dem DALI-Industriestandard (Digital Addressable Lighting Interface) kann für jede Komponente bzw. jeden Busteilnehmer eine zufällig generierte, und dann mit deren Hilfe eine fest vergebene Adresse für die Ansteuerung in dem Bussystem generiert werden. Jeder Busteilnehmer bzw. jede Komponente ist mit seiner/ihrer Adresse im Bussystem adressierbar und kann Steuerbefehle und/oder Statusinformation innerhalb des Bussystems senden und empfangen.

Die WO 2016/065382 A1 offenbart ein Bussystem, an dem mehrere Betriebsgeräte und ein Steuergerät zum Steuern der Betriebsgeräte angekoppelt sind, wobei das Steuergerät mit einem auf dem Internetprotokoll basierenden Netzwerk gekoppelt ist und aus diesem die Steuerbefehle für die Betriebsgeräte empfängt.

Die WO 2016/065382 A1 offenbart jedoch nicht, wie die Steuerbefehle dem jeweiligen Betriebsgerät zugeordnet werden bzw. die jeweilige Busadresse bestimmt wird, was für eine individuelle Steuerung der Betriebsgeräte nötig ist. Zudem sind für die Erzeugung von Steuerbefehlen oft Informationen zum aktuellen Betriebsstatus, der Konfiguration oder Eigenschaften der Betriebsgeräte nötig, welche von den Betriebsgeräten über das Netzwerk abgefragt werden müssen.

Stefan Seifried et al.: "KNX IPv6: Design issues and proposed architecture", 2017 IEEE 13th International Workshop on Factory Communication Systems (WFCS), 20170531 IEEE offenbart ein Kommunikationsmodul gemäß dem Oberbegriff des beigefügten Anspruches 1.

Die DE 10 2005 034972 A1 offenbart ein Verfahren zum Fernzugriff vom Internet auf ein lokales Netzwerk, bei dem in einem Vermittlungsknoten des Netzwerkes eine

Adressumsetzung mit Hilfe einer Tabelle, die im Netzwerk vorhandenen Geräte sowie deren IP-Adressen anzeigt, erfolgt.

Eine Schnittstelle, die einen DALI-Bus mit einem KNX-Bus verbindet, ist in Mdt Technologies Gmbh: "Technical Manual MDT DaliControl IP Gateway w/ Webinterface" offenbart.

Der Erfindung liegt die Aufgabe zugrunde, Vorrichtungen und Verfahren anzugeben, die die beschriebenen Probleme verringern. Aufgabe ist es insbesondere ein Kommunikationsmodul, ein Beleuchtungssystem und ein Verfahren bereitzustellen, mit denen eine Verbindung eines Beleuchtungs-Bussystems mit einem auf einem Internetprotokoll basierenden Netzwerk für die Übermittlung oder Abfrage von Daten in einfacher und kostengünstiger Weise möglich ist. Dabei soll der Zugriff auf das Bussystem aus dem Netzwerk nur mit Hilfe von Standard-Internet Protokollen wie HTTP o.ä. möglich sein und zwar ohne die Besonderheiten des Bussystems und seiner Betriebsgeräte zu kennen.

Diese Aufgabe wird gemäß den Merkmalen der unabhängigen Ansprüche gelöst. Die Erfindung wird durch die Merkmale der abhängigen Ansprüche weitergebildet.

Die Erfindung betrifft ein Kommunikationsmodul zum Verbinden eines Beleuchtungs-Bussystems mit einem auf einem Internetprotokoll basierenden Netzwerk, wobei eine oder mehrere Komponenten an das Bussystem angekoppelt sind, jeder an dem Bussystem angekoppelten Komponente eine eindeutige Busadresse zugeordnet ist, zumindest eine in dem Bussystem abfragbare Eigenschaft zumindest einer Komponente eine über das Netzwerk zugängliche Ressource darstellt, dem Kommunikationsmodul mehrere Netzwerkadressen zugeordnet sind, zumindest eine der mehreren Netzwerkadressen die Busadresse einer Komponente enthält und das Kommunikationsmodul dazu ausgebildet ist, an die zumindest eine Netzwerkadresse gesendeten Daten aus dem Netzwerk zu empfangen, die Busadresse der Komponente aus der Netzwerkadresse zu extrahieren, an die Komponente mit der extrahierten Busadresse zu sendende Daten auf der Grundlage der Ressource und / oder den empfangenen Daten zu ermitteln und die ermittelten Daten an die Komponente mit der extrahierten Busadresse über das Bussystem zu übertragen, oder die von einer Komponente autonom erzeugten und an das Kommunikationsmodul gesendeten Daten über das Netzwerk zumindest einem Netzteilnehmer zur Verfügung zu stellen.

Gemäß der vorliegenden Erfindung ist jeder an dem Bussystem angekoppelten Komponente eine eindeutige Busadresse (Komponenten-ID) und dem Kommunikationsmodul mehrere Netzwerkadressen zugeordnet, wobei zumindest eine der mehreren Netzwerkadressen die Busadresse (Komponenten-ID) einer Komponente enthält und das Kommunikationsmodul dazu ausgebildet ist, an die zumindest eine Netzwerkadresse gesendete Daten aus dem Netzwerk zu empfangen, die Busadresse der Komponente aus der Netzwerkadresse zu extrahieren, an die Komponente mit der extrahierten Busadresse zu sendende Daten auf der Grundlage der empfangenen Daten (Ressourcen-Pfad der URL) zu ermitteln und in Daten oder Befehle zu übersetzen, diese übersetzten und ermittelten Daten an die Komponente mit der extrahierten Busadresse über das Bussystem zu übertragen.

Somit können die aus dem Netzwerk empfangenen Daten in einfacher Weise einer Komponente des Bussystems zugeordnet werden. Es ist keine Bestimmung der Busadresse beispielsweise auf der Grundlage des Typs des Steuerbefehls oder der Abfrage nötig. Dies bietet den Vorteil, dass für eine Abfrage die spezifischen Eigenschaften des Bussystems nicht bekannt sein müssen.

Das Kommunikationsmodul ist dazu ausgebildet, die Betriebsgeräte am Bussystem automatisch zu erkennen. Mit Hilfe einer im Datenspeicher hinterlegten Übersetzungstabelle werden die von den Betriebsgeräten bereitgestellten Services in Netzwerkressourcen übersetzt. Auch dies erfolgt automatisch. Diese Ressourcen können über das Rechnernetz angesprochen werden, um Daten der Betriebsgeräte abzufragen oder Befehle an Geräte zu senden um somit die Konfiguration der Geräte zu ändern. Somit kann transparent auf die Betriebsgeräte zugegriffen werden, ohne dass spezifische Befehle bekannt sein müssen. Auch das angeschlossene Bussystem wird somit für einen Zugriff aus dem Rechnernetz völlig irrelevant.

Das Kommunikationsmodul ist so ausgebildet, dass über eine "allgemeine bekannte Adresse" Informationen über die bereitgestellten Ressourcen abgefragt werden können. Über diesen Weg kann ein externes Gerät ohne Vorkenntnisse alle Informationen über das Bussystem und die angeschlossenen Betriebsgeräte ermitteln. Diese Informationen werden als hierarchisch organisierte Ressourcen-Pfade zur Verfügung gestellt, wobei zu jeder Ressource auch der Datentyp abgefragt werden kann.

Beispielsweise sind mehrere Betriebsgeräte an dem Bussystem angeschlossen und weisen eine spezifische Bus-Adresse erhalten auf. Das Betriebsgerät scannt das Bussystem und ermittelt die Typen und Adressen der angeschlossenen Betriebsgeräte. Die Busadresse im Bussystem wird in eine IPv6-Adresse übersetzt. Dann werden die von den Betriebsgeräten zur Verfügung gestellten Services mit Hilfe der im Datenspeicher hinterlegten Informationen ermittelt. Diese werden in Ressourcen-Pfade übersetzt, z.B. /Einstellung/Farbe. Die Kombination Netzwerkadresse/Ressourcen-Pfad bildet somit die URL, über den ein Service eines Betriebsgerätes genutzt werden kann.

Alternativ oder zusätzlich kann das Kommunikationsmodul dazu ausgebildet sein, die von einer Komponente autonom erzeugten und an das Kommunikationsmodul gesendeten Daten (Steuerbefehle, Statusmeldungen) über das Netzwerk zumindest einem Netzteilnehmer zur Verfügung zu stellen. Das Übermitteln der Daten (Steuerbefehle, Statusmeldungen) an den Netzteilnehmer kann unmittelbar nach dem Empfang dieser Daten in dem Kommunikationsmodul oder auf Aufforderung des Netzteilnehmers hin erfolgen. Hierzu kann der Netzteilnehmer dem Kommunikationsmodul die Netzwerkadresse, an welche die Daten gesendet werden sollen, mitteilen. Beispielsweise kann dies einmalig bei der Installation beispielsweise über das Netzwerk mitgeteilt werden oder aufgrund einer Abfrage ermittelt werden. Das kann über eine spezielle Ressource "Callback URL" erfolgen, die für alle Komponenten vorhanden ist, die autonom Daten senden können. Zusätzlich oder alternativ kann der Netzteilnehmer das Kommunikationsmodul die Netzwerkadresse des Netzteilnehmers aus den von dem Netzteilnehmer empfangen Daten oder mittels einer Tabelle, welche der Busadresse der Komponente und/oder dem Steuerbefehl/der Statusmeldung zumindest eine Netzwerkadresse eines Netzteilnehmers zuordnet, ermitteln.

Die an dem Bus angekoppelten Komponenten können Sensoren, Leuchten, Betriebsgeräte, Aktoren, Schalter und/oder Dimmer sein, welche Steuer- und/oder Statusinformationen über den Bus übertragen.

Das Kommunikationsmodul kann dazu ausgebildet sein, die Adresse der Komponente aus dem Interface-Identifier der auf dem Internet Protocol Version 6 basierenden Netzwerkadresse zu extrahieren, wobei die Busadresse an einer bestimmten, dem Kommunikationsmodul bekannten Stelle der Netzwerkadresse eingefügt oder durch bestimmte Zeichen in der Netzwerkadresse markiert sein kann.

In dem Bussystem können mehrere Komponenten mittels einer Gruppen-Busadresse adressierbar sein, wobei das Kommunikationsmodul dazu ausgebildet ist, die Gruppen-Busadresse auf der Grundlage einer in der Netzwerkadresse enthaltenen Multicast-Adresse zu ermitteln und eine Datenübertragung an die der ermittelten Gruppen-Busadresse zugehörigen Komponenten auf der Grundlage der empfangenen Daten durchzuführen.

Alternativ oder zusätzlich kann das Kommunikationsmodul dazu ausgebildet sein, aus den empfangenen Daten einen Steuerbefehl zu ermitteln und den ermittelten Steuerbefehl an die Komponente mit der extrahierten Busadresse bzw. die Komponenten mit der ermittelten Gruppen-Busadresse zu senden. Der Steuerbefehl kann in dem Ressourcen-Pfad der URL oder in der Netzwerkadresse oder in einem anderen Teil der empfangenen Daten enthalten sein und kann ein Ein-, Ausschalt- Dimm-, Positions- oder Konfigurations-Befehl sein. Auf diese Weise ist es möglich, eine Leuchte oder Rollläden mit einem beispielsweise mobilen, mit dem Netzwerk verbunden Steuergerät (das auch ein Smartphone sein kann) aus der Ferne zu steuern.

Alternativ oder zusätzlich kann das Kommunikationsmodul dazu ausgebildet sein, als ein, zumindest aus Sicht des Netzwerks, transparentes Gateway eine Umwandlung des Datenpaketformats der empfangenen Daten in das Datenpaketformat des Bussystems durchzuführen. Dies erlaubt die Verbindung mehrerer, jeweils ein Kommunikationsmodul aufweisend Bussysteme über das Netzwerk.

Alternativ oder zusätzlich kann zumindest eine in dem Bussystem abfragbare Eigenschaft zumindest einer Komponente eine über das Netzwerk zugängliche Ressource darstellen, die über einen URL erreichbar ist, wobei das Kommunikationsmodul dazu ausgebildet ist, wenn die empfangenen Daten eine Anfrage (mit einem Hypertext-Übertragungsprotokoll HTTP oder einem anderen Protokoll, wie CoAP, MQTT, LWM2M der Ressource enthalten, die der angeforderten Ressource in einer Übersetzungs-Tabelle zugeordnete Eigenschaft der Komponente oder ein Bus-Kommando zum Abfragen oder Setzen dieser Eigenschaft zu bestimmen und diese Eigenschaft in der Datenübertagung abzufragen.

Somit ist es möglich, im Internet der Dinge (IdD; IoT: Internet of things), Bus-Komponenten wie jedes andere IdD-Gerät über eine URL-Adresse zu adressieren und mit den gleichen Verfahren und Kommandos anzusteuern. Einige oder alle Eigenschaften der Komponenten, wie die Steuerbarkeit der Lichtintensität oder Farbtemperatur, sind hierbei als Ressourcen aus dem Netzwerk erreichbar.

Zusätzlich kann das Kommunikationsmodul dazu ausgebildet sein, ein oder mehrere Datenpakete mit von der Komponente empfangenen Informationen bezüglich der abgefragten Eigenschaft zu erzeugen, eine Netzwerkadresse für die Übertragung dieser Datenpakete auf der Grundlage der empfangenen Daten zu ermitteln und die Datenpakete an die ermittelte Netzwerkadresse zu senden. Das Kommunikationsmodul kann mit den von der Komponente empfangenen Informationen ein XML-Dokument oder ein anderes Dokument erzeugen und an die ermittelte Netzwerkadresse als Antwort auf die abgefragte Eigenschaft/Ressource senden.

Alternativ oder zusätzlich kann jeder Komponente mit zumindest einer abfragbaren Ressource eine Übersetzungs-Tabelle oder ein Tabellen-Eintrag zugeordnet sein, wobei das Kommunikationsmodul dazu ausgebildet ist, mit Hilfe der in der Netzwerkadresse enthaltenen Busadresse (Komponenten-ID) die jeweilige Übersetzungs-Tabelle bzw. den entsprechenden Tabellen-Eintrag für die Bestimmung der abzufragenden Eigenschaft zu ermitteln.

Das Bussystem kann ein DALI-Bus sein, bei dem zumindest eine Komponente eine als "DALI-Event-Message" bezeichnete Nachricht über das Bussystem senden kann, wobei die "DALI-Event-Message"-Daten den oben genannten von einer Komponente autonom erzeugten Daten entsprechen und der "DALI-Event-Message" eine Ressource "callback URL" zugeordnet ist, an der eine Adresse hinterlegt werden kann, an die dann die "DALI-Event-Message" oder in dieser Nachricht enthaltenen Informationen/Daten weitergeleitet wird.

Das Bussystem kann eine "Active Low" nutzen.

Alternativ oder zusätzlich kann das Kommunikationsmodul dazu ausgebildet sein, zumindest eine von einer Komponente zu einem bestimmten Ereignis an eine bestimmte Busadresse über das Bussystem gesendete Nachricht als autonom erzeugte Daten zu detektieren, eine der bestimmten Busadresse zugeordnete Ressource und über diese eine Netzwerkadresse zu bestimmen und die Nachricht an die bestimmte Netzwerkadresse zu senden. Dies erlaubt eine Fernüberwachung von Komponenten und/oder die Ansteuerung busexterner, sich im Netzwerk befindlicher Geräte.

Gemäß der vorliegenden Erfindung weist ein Beleuchtungssystem ein Bussystem, mehrere an dem Bussystem angekoppelte Komponenten und zumindest eines der oben beschriebenen Kommunikationsmodule auf.

Gemäß der vorliegenden Erfindung weist ein Verfahren zum Übertragen von Daten zwischen zumindest einer an einem Beleuchtungs-Bussystem angekoppelten Komponente und einem Teilnehmer eines auf einem Internetprotokoll basierenden Netzwerks, bei dem das Bussystem über eine Schnittstelle an das Netzwerk angekoppelt ist, jeder an dem Bussystem angekoppelten Komponente eine eindeutige Busadresse zugeordnet ist, der Schnittstelle mehrere Netzwerkadressen zugeordnet sind und zumindest eine der mehreren Netzwerkadressen die Busadresse einer Komponente enthält, die Schritte:
- Empfangen von aus dem Netzwerk an die zumindest eine Netzwerkadresse gesendeten Daten von der Schnittstelle,
- Extrahieren der Busadresse der Komponente aus der Netzwerkadresse,
- Bestimmen der der angeforderten Ressource zugeordneten Eigenschaft der Komponente,
- Ermitteln von an die Komponente mit der extrahierten Busadresse zu sendenden Daten auf der Grundlage der empfangenen Daten und
- Übertragen der ermittelten Daten an die Komponente mit der extrahierten Busadresse über das Bussystem auf, wobei die an dem Bussystem angekoppelten Komponenten automatisch durch die Schnittstelle erkannt und die von den erkannten Komponenten bereitgestellten Eigenschaften durch die Schnittstelle mittels der in einem Datenspeicher hinterlegten Übersetzungs-Tabelle in Ressourcen übersetzt werden, die über das Netzwerk zugänglich sind, um Daten der Komponenten abzufragen oder Befehle an die Komponenten zu senden, um somit die Konfiguration der Komponenten zu ändern.

Alternativ oder zusätzlich kann zumindest eine in dem Bussystem abfragbare Eigenschaft zumindest einer Komponente eine über das Netzwerk zugängliche Ressource darstellen, die über einen URL erreichbar, wobei wenn die empfangenen Daten eine http-Anfrage der Ressource von einem Netzteilnehmer enthalten, in dem Verfahren folgende Schritte ausgeführt werden:
- Bestimmen der der angeforderten Ressource in der Übersetzungs-Tabelle zugeordneten Eigenschaft der Komponente,
- Abfragen der bestimmten Eigenschaft in einer Datenübertagung an die Komponente,
- Empfangen von Informationen zu der in der Datenübertagung abgefragten Eigenschaft von der Komponente,
- Erzeugen eines Datenpakets mit den empfangenen Informationen,
- Ermitteln einer Netzwerkadresse für die Übertragung der Daten auf der Grundlage der empfangenen Daten, und
- Senden des Datenpakets an die ermittelte Netzwerkadresse.

Nachfolgend wird die Erfindung anhand der beiliegenden Zeichnungen näher erläutert. Es zeigen:
Fig. 1 ein Beleuchtungssystem nach einem ersten Ausführungsbeispiel gemäß der vorliegenden Erfindung,
Fig. 2 eine vereinfachte Schaltung des Kommunikationsmoduls nach einem Ausführungsbeispiel gemäß der vorliegenden Erfindung,
Fig. 3 eine schematische Darstellung eines Beleuchtungssystems nach einem zweiten Ausführungsbeispiel gemäß der vorliegenden Erfindung,
Fig. 4 ein vereinfachtes Diagramm zur Darstellung des Verfahrens nach einem Ausführungsbeispiel, und
Fig. 5 ein vereinfachtes Diagramm zur Darstellung des Verfahrens nach einem weiteren Ausführungsbeispiel.

Komponenten mit gleichen Funktionen sind in den Figuren mit gleichen Bezugszeichen gekennzeichnet.

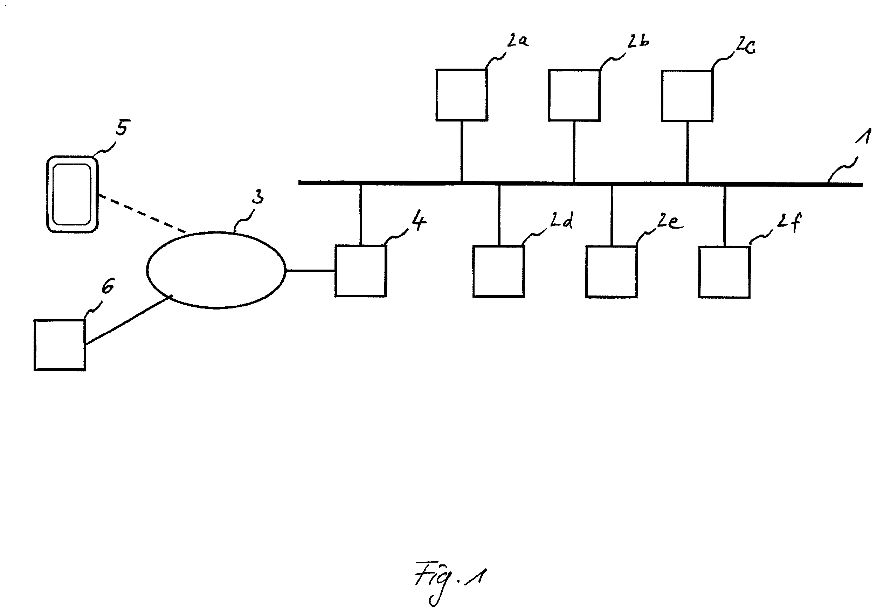

Fig. 1 zeigt den möglichen Aufbau eines Beleuchtungssystems gemäß der vorliegenden Erfindung. Das System weist einen Datenbus 1, eine Vielzahl von an dem Datenbus 1 angeschlossenen Komponenten 2a..2f und ein mit dem Datenbus 1 und einem auf einem Internetprotokoll basierenden Netzwerk 3 verbundenes Kommunikationsmodul 4 auf.

Der Datenbus 1 kann ein Bussystem gemäß dem DALI-Industriestandard sein, über das die Komponenten 2a..2f, wie Leuchten-Betriebsgeräte, Lichtsensoren, Bewegungssensoren, Taster und Steuergeräte, Steuerbefehle und Betriebsdaten übertragen. Gemäß dem DALI 2 Standard müssen Sensoren, wie Helligkeitssensoren und Bewegungssensoren für die Ansteuerung von Leuchten-Betriebsgeräte nicht mehr von einem Steuergerät abgefragt werden, sondern können selbst Steuerbefehle an ein Betriebsgerät senden, um beispielsweise eine Leuchte einzuschalten. Damit mit einem an dem Datenbus 1 angekoppelten und ebenfalls der Leuchte zugeordneten Taster die Leuchte wieder ausgeschaltet werden kann, ohne dass der Taster zweimal betätigt werden muss, kann dem Taster der Einschaltsteuerbefehl des Sensors oder der Betriebszustand der Leuchte mittels einer sogenannten "DALI Event Message", also einer Nachricht über ein bestimmtes Ereignis, über den Datenbus 1 mitgeteilt werden. Auf diese Weise kann der Taster ermitteln, dass die Leuchte bereits leuchtet und bei einen Tastendruck nicht ein- sondern ausgeschaltet werden soll.

Der Datenbus 1 kann ein Bussystem mit einer "Active Low" Übertragung nutzen. Vorzugsweise ist eine Energieversorgung von angeschlossenen Komponenten 2a..2f wie beispielsweise Sensoren über den Datenbus 1 möglich. Der hohe Pegel (High-Pegel) kann in dem Bereich von 12V-20,5V liegen. Beispielsweise weist das Bussystem auf dem Datenbus 1 eine Übertragungsgeschwindigkeit bis 1,2kbit auf.

Das in Fig. 1 gezeigte Netzwerk 3 ist ein Rechnernetz, in dem Nutzdaten in Paketen versendet und in dem nach einem Schichtenmodell Steuerinformationen verschiedener Netzwerkprotokolle ineinander verschachtelt um die eigentlichen Nutzdaten herum gemäß dem Internet Protocol Version 6 (IPv6) übertragen werden.

Ein mobiles Steuergerät 5 ist über eine Funkverbindung mit dem Netzwerk 3 verbindbar und dient zum Abfragen von Status- und Betriebsdaten der Komponenten 2a..2f und zur Steuerung zumindest einiger der Komponenten 2a..2f. Das Steuergerät 5 kann ein Smartphone, ein Personal Digital Assistant (PDA) oder ein Tabletcomputer sein, das bzw. der über eine Mobilfunkverbindung oder ein lokales Funknetz (WLAN) an das Netzwerk 3 ankoppelbar ist und auf dem mittels einer grafischen Benutzerschnittstelle die Status- und Betriebsdaten abgefragt und angezeigt sowie Steuerbefehle an die einzelnen Komponenten 2a..2f gesendet werden können. Alternativ ist selbstverständlich auch eine nicht mobile Lösung, z.B. ein PC, denkbar.

Mit dem Netzwerk 3 ist auch ein Sensor 6 verbunden, der sich außerhalb des Gebäudes befinden kann, in welchem der Datenbus 1 installiert ist, und der Steuerbefehle an zumindest eine Komponente 2a..2f über das Netzwerk 3, das Kommunikationsmodul 4 und den Datenbus 1 sendet. Der Sensor 6 kann ein Windsensor sein, der einen Antrieb einer Markise als eine Komponente 2a..2f ansteuert.

Das Kommunikationsmodul 4 kann ein Gateway sein und ermöglicht eine transparente Übertragung der Steuerbefehle und Abfragen von dem Steuergerät 5 und dem Sensor 6 an die gewünschte Komponente 2a..2f. Transparent bedeutet hierbei, dass zumindest einige der Komponenten 2a..2f von dem Steuergerät 5 und dem Sensor 6 über Netzwerkadressen gemäß dem Internet Protocol Version 6 (IPv6) ansprechbar sind, obwohl innerhalb des Datenbusses 1 jede Komponente 2a..2f nur über ihre eindeutige Busadresse/DALI-Adresse ansprechbar ist.

Gemäß der vorliegenden Erfindung sind dem Kommunikationsmodul mehrere Netzwerkadressen zugeordnet, wobei zumindest eine der mehreren Netzwerkadressen die Busadresse (DALI-Adresse) einer Komponente 2a..2f enthält.

Das Steuergerät 5 und der Sensor 6 senden ihre Anfragen und Steuerbefehle an das Kommunikationsmodul 4, welches die Busadresse der Komponenten 2a..2f aus der Netzwerkadresse extrahiert, die Anfragen und Steuerbefehle entsprechend dem Ressourcen-Pfad gegebenenfalls in DALI-konforme Anfragen und Steuerbefehle umwandelt und an die Komponenten 2a..2f mit der extrahierten Busadresse sendet. Bei Anfragen kann das Kommunikationsmodul 4 die Netzwerkadresse des Steuergeräts 5 bzw. des Sensors 6 aus den von dem Steuergerät 5 bzw. dem Sensor 6 empfangenen Daten ermitteln und die über den Datenbus 1 empfangene Antwort auf die Anfrage an die ermittelte Netzwerkadresse senden. Auf diese Weise sind zumindest einige der Komponenten 2a..2f von dem Steuergerät 5 und dem Sensor 6 wie ein Netzteilnehmer ansprechbar.

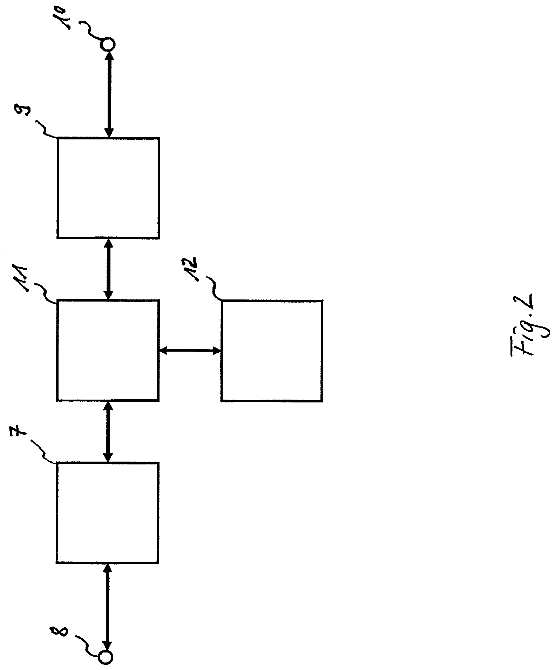

Fig. 2 zeigt eine vereinfachte Schaltung des Kommunikationsmoduls 4 nach einem Ausführungsbeispiel gemäß der vorliegenden Erfindung. Das in Fig. 2 gezeigte Kommunikationsmodul 4 weist eine Netzwerkschnittstelle 7, die über einen Anschluss 8 mit dem Netzwerk 3 verbindbar ist, eine Busschnittstelle 9, die mit dem Datenbus 1 verbindbar ist, eine Steuereinrichtung 11 und einen Datenspeicher 12 auf.

Die Steuereinrichtung 11 extrahiert die Busadresse und/oder die Anfragen bzw. Steuerbefehle aus den über die Netzwerkschnittstelle 7 aus dem Netzwerk 3 empfangenen Daten, wandelt die Anfragen bzw. Steuerbefehle mittels einer in dem Datenspeicher 12 gespeicherten Tabelle in DALI-konforme Anfragen und Steuerbefehle um und sendet diese über die Busschnittstelle 9 an die Komponente 2a..2f mit der extrahierten Busadresse. Dem Kommunikationsmodul 4 kann eine eigene eindeutige Busadresse zugeordnet sein und die Steuereinrichtung 11 kann die über den Datenbus 1 übertragenen Daten mittels der Busschnittstelle 9 erfassen und bestimmte Daten und/oder an bestimmte Busadressen gesendete Daten an das Steuergerät 5 und/oder den Sensor 6 weiterleiten. Hierzu sind zu bestimmten Daten bzw. bestimmten Busadressen spezielle Ressourcen "Callback URL" zugeordnet, mit deren Hilfe Netzwerkadressen gespeichert oder automatisch berechnet werden können. Eine solche Weiterleitung kann von dem Steuergerät 5 und/oder dem Sensor 6 mit Hilfe der Ressourcen "Callback URL" beauftragt werden.

In dem beschriebenen Beispiel sind lediglich ein Steuergerät 5 und ein Sensor 6 mit dem Netzwerk bzw. dem Kommunikationsmodul 4 verbunden. Es können jedoch eine Vielzahl von Steuergeräten 5, Sensoren 6 oder andere Geräte, wie Aktoren, Schalter oder Betriebsgeräte, mit dem Netzwerk 3 bzw. dem Kommunikationsmodul 4, auch gleichzeitig, verbunden sein.

Die Anfragen bzw. Steuerbefehle können sind im Ressourcen-Pfad des Zugriffs, in den Datenpaketen oder der Netzwerkadresse enthalten sein und/oder bereits DALI-konform vorliegen, so dass keine Umwandlung und kein Datenspeicher 12 nötig ist, um sie über den Datenbus 1 übertragen zu können. Die grafische Benutzerschnittstelle kann eine DALI-konforme oder die eines anderen Steuersystems sein.

Gemäß der vorliegenden Erfindung können nicht nur den Komponenten 2a..2f ein eindeutiger

Identifikator (URI) in dem Netzwerk 3 zugeordnet werden, sondern auch deren abfragbare oder einstellbare Eigenschaften, so dass diese Eigenschaften über das Netzwerk 3 bzw. im Internet der Dinge (IdD) als Ressource/Ding verfügbar und ggf. mit anderen Ressourcen/Dingen verknüpfbar sind.

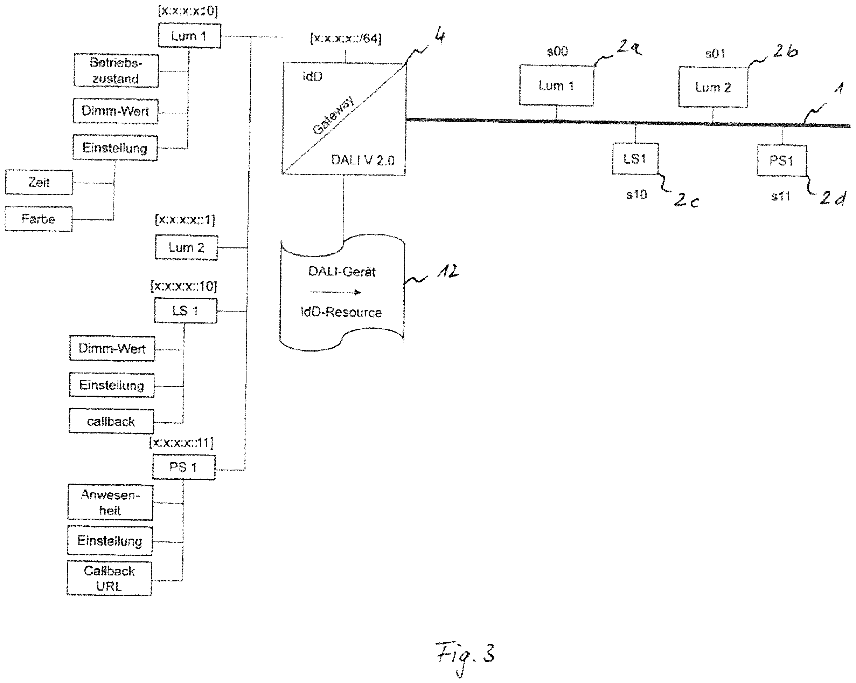

Fig. 3 zeigt eine schematische Darstellung eines solchen Beleuchtungssystems nach einem zweiten Ausführungsbeispiel gemäß der vorliegenden Erfindung. Bei dem in Fig. 3 gezeigten Beleuchtungssystem sind das mit dem Netzwerk 4 (nicht gezeigt) verbundene Kommunikationsmodul 4 und die Komponenten 2a..2f an den Datenbus 1 angekoppelt, wobei die Komponente 2a eine Leuchte "Lum 1" mit der Busadresse s00 ist, die Komponente 2b eine Leuchte "Lum 2" mit der Busadresse s01 ist, die Komponente 2c ein Dämmerungssensor "LS1" mit der Busadresse s10 ist und die Komponente 2d ein Bewegungsmelder "PS1" mit der Busadresse s11 ist.

In dem Beleuchtungssystem sind in einer in dem Datenspeicher 12 gespeicherten Tabelle die Eigenschaften der Komponenten 2a..2f hinterlegt, welche über das Netzwerk 4 als Ressourcen abfragbar und/oder einstellbar sein sollen.

Die netzseitig im Internet der Dinge (IdD) als verfügbaren Ressourcen/Dinge des in dem in Fig. 3 gezeigten Beleuchtungssystems sind rechts neben dem Kommunikationsmodul 4 in einer Verzeichnisstruktur mit der Netzwerkadresse angegeben.

Für die Leuchte "Lum 1" sind die Ressourcen "Betriebszustand", "Dimm-Wert" und die Einstellungen "Zeit" (Dimm-Geschwindigkeit) und "Farbe" (Farbtemperatur) verfügbar. Der Leuchte "Lum 1" ist die Netzwerkadresse "x:x:x:x::0" zugeordnet, wobei die "0" der Busadresse s00 entspricht. Das Kommunikationsmodul 4 ist ein Gateway zum Teilnetz (Subnet) "x:x:x:x::/64" des Netzwerks 3 und kann auch eine eigene Adresse in diesem Subnet zu Konfigurationszwecken haben.

Der Bewegungsmelder "PS1" kann als eine Eigenschaft die oben beschriebene "DALI-Event-Message" an eine vorgegebene Busadresse senden, wobei in der IdD-Repräsentation die "DALI-Event-Message" an eine "Callback URL" weitergeleitet wird, die über eine entsprechende Ressource über das Netzwerk gesetzt werden kann.

Das Kommunikationsmodul ist dazu ausgebildet, die Betriebsgeräte am Bussystem 1 automatisch zu erkennen. Mit Hilfe einer im Datenspeicher 12 hinterlegten Übersetzungstabelle werden die von den Betriebsgeräten bereitgestellten Services in Netzwerkressourcen übersetzt. Auch dies erfolgt automatisch. Diese Ressourcen können über das Netzwerk 3 angesprochen werden, um Daten der Betriebsgeräte abzufragen oder Befehle an Geräte zu senden um somit die Konfiguration der Geräte zu ändern. Somit kann transparent auf die Betriebsgeräte zugegriffen werden, ohne dass spezifische Befehle bekannt sein müssen. Auch das angeschlossene Bussystem 1 wird somit für einen Zugriff aus dem Rechnernetz völlig irrelevant.

Das Kommunikationsmodul ist so ausgebildet, dass über eine "allgemeine bekannte Adresse" Informationen über die bereitgestellten Ressourcen abgefragt werden können. Über diesen Weg kann ein externes Gerät 5 ohne Vorkenntnisse alle Informationen über das Bussystem und die angeschlossenen Betriebsgeräte ermitteln. Diese Informationen werden als hierarchisch organisierte Ressourcen-Pfade zur Verfügung gestellt, wobei zu jeder Ressource auch der Datentyp abgefragt werden kann.

In dem Beispiel der Fig. 3 sind vier Betriebsgeräte als Komponenten 2a..2d an dem Bussystem 1 angeschlossen und haben eine spezifische Bus-Adresse erhalten (s00...sl 1). Das Betriebsgerät scannt das Bussystem und ermittelt die Typen und Adressen der angeschlossenen Betriebsgeräte. Die Busadresse im Bussystem, z.B. s00 für das Gerät Luml wird in eine IPv6-Adresse übersetzt: x:x:x:x:x::0. Dann werden die von den Betriebsgeräten 2a..2d zur Verfügung gestellten Services mit Hilfe der im Datenspeicher 12 hinterlegten Informationen ermittelt. Diese werden in Ressourcen-Pfade übersetzt, z.B. /Einstellung/Farbe. Die Kombination Netzwerkadresse/Ressourcen-Pfad bildet somit die URL, über den ein Service eines Betriebsgerätes genutzt werden kann. Der aktuelle Farbwert von Lum1 kann beispielsweise über x:x:x:x:x::0/Einstellung/Farbe abgefragt bzw. geändert werden.

Das Kommunikationsmodul kann dazu ausgelegt sein, eine Aufteilung von aus dem Netzwerk 3 gesendeten Daten auf mehrere DALI-Buszugriffe vorzunehmen, beispielsweise bei komplexen Ressourcen. Auf diese Weise kann es ermöglicht werden, komplexe Ressourcen wie beispielsweise ein Rücksetzen (Reset) des Datenbusses 1, das Auslesen von Wertetabellen von einzelnen oder auch einer Mehrzahl von Komponenten 2a..2d, eine Durchführung eines Firmware-Updates für einzelne oder auch eine Mehrzahl von Komponenten 2a..2d.

Das Kommunikationsmodul kann dazu ausgelegt sein, eine Zwischenspeicherung von aus dem

Netzwerk 3 gesendeten Daten vorzunehmen. Das Kommunikationsmodul kann auch dazu ausgelegt sein, eine Verifikation der an die Komponenten 2a..2f übertragenen Daten vorzunehmen.

Das Netzwerk 3 kann dazu ausgelegt sein, dass der Timeout für das Protokoll des Netzwerkes 3 konfigurierbar ausgelegt sein kann. Beispielsweise kann das Kommunikationsmodul dazu ausgelegt sein, den Timeout-Parameter des Netzwerkes 3 anhand des Typs des angeschlossenen Datenbusses 1 oder anhand der Anzahl oder auch Art der an den Datenbus 1 angeschlossenen Komponenten 2a..2f festzulegen.

Mit Hilfe der Erfindung wird mittels einer Adressübersetzung so beispielsweise verschiedenen Arten von Zugriffen auf einzelne oder auch eine Mehrzahl von Komponenten 2a..2d durchführbar, beispielsweise auf einzelne (Unicast), mehrere (Multicast) oder auf die Gesamtheit (Broadcast).

Die angegebenen Eigenschaften und Ressourcen sind selbstverständlich lediglich Beispiele und demselben Schema folgend können weitere und/oder andere Ressourcen und Eigenschaften definiert sein.

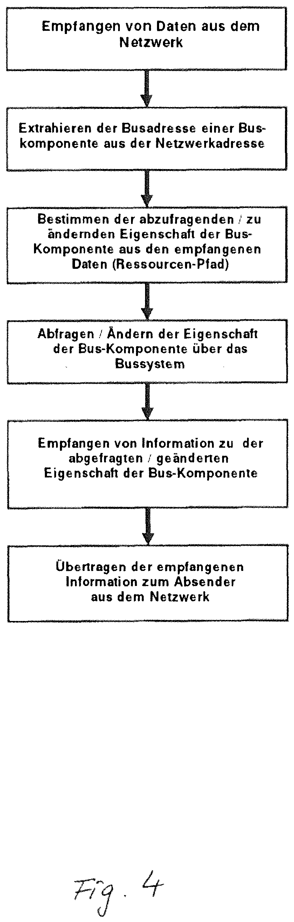

Fig. 4 zeigt ein vereinfachtes Diagramm zur Darstellung des Verfahrens gemäß eines Ausführungsbeispiels, bei dem die vorstehend bereits erläuterten Verfahrensschritte noch einmal in einem eigenen Flussdiagramm dargestellt sind.

Gemäß dieses Ausführungsbeispiels weist ein Verfahren zum Übertragen von Daten zwischen zumindest einer an einem Beleuchtungs-Bussystem angekoppelten Komponente 2a..2f und einem Teilnehmer eines auf einem Internetprotokoll basierenden Netzwerks 3, bei dem das Bussystem über eine Schnittstelle an das Netzwerk 3 angekoppelt ist, jeder an dem Bussystem 1 angekoppelten Komponente 2a..2f eine eindeutige Busadresse zugeordnet ist, der Schnittstelle mehrere Netzwerkadressen zugeordnet sind und zumindest eine der mehreren Netzwerkadressen die Busadresse einer Komponente enthält, die Schritte:
- Empfangen von aus dem Netzwerk an die zumindest eine Netzwerkadresse gesendeten Daten von der Schnittstelle,
- Extrahieren der Busadresse der Komponente 2a..2f aus der Netzwerkadresse,
- Bestimmen der der angeforderten Ressource (URL) zugeordneten Eigenschaft (Service) der Komponente mit Hilfe einer Übersetzungs-Tabelle,
- Ermitteln von an die Komponente 2a..2f mit der extrahierten Busadresse zu sendenden Daten auf der Grundlage der empfangenen Daten und der angefragten Ressource, und
- Übertragen der ermittelten Daten an die Komponente 2a..2f mit der extrahierten Busadresse über das Bussystem auf.

Dabei kann eine in dem Bussystem abfragbare Eigenschaft zumindest einer Komponente 2a..2f eine über das Netzwerk 3 zugängliche Ressource darstellen, die über einen URL erreichbar ist, die empfangenen Daten können eine Anfrage der Ressource von einem Netzteilnehmer 5, 6 enthalten, und das Verfahren die folgenden Schritte aufweisen:
Bestimmen der angefragten Ressource in einer Tabelle zugeordneten Eigenschaft der Komponente 2a..2f,
Empfangen von Informationen zu der in der Datenübertagung abgefragten Eigenschaft von der Komponente 2a..2f,
Erzeugen eines Datenpakets mit den empfangenen Informationen, und
Senden des Datenpakets an die Netzwerkadresse des Netzteilnehmers 5, 6.

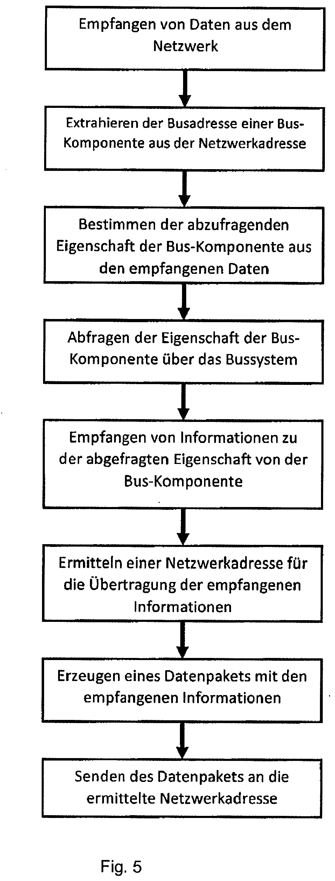

Fig. 5 zeigt ein vereinfachtes Diagramm zur Darstellung des Verfahrens gemäß eines weiteren Ausführungsbeispiels, bei dem die vorstehend bereits erläuterten Verfahrensschritte noch einmal in einem eigenen Flussdiagramm dargestellt sind.

Es kann zumindest eine in dem Bussystem abfragbare Eigenschaft zumindest einer Komponente stellt eine über das Netzwerk zugängliche Ressource darstellen, die über einen URL erreichbar, wobei wenn die empfangenen Daten eine Anfrage der Ressource von einem Netzteilnehmer enthalten, in dem Verfahren folgende Schritte ausgeführt werden:
- Bestimmen der der angefragten Ressource vorzugsweise in einer Tabelle zugeordneten Eigenschaft der Komponente,
- Empfangen von Informationen zu der in der Datenübertagung abgefragten Eigenschaft von der Komponente,
- Erzeugen eines Datenpakets mit den empfangenen Informationen,
- Ermitteln einer Netzwerkadresse für die Übertragung der Daten auf der Grundlage der empfangenen Daten, und
- Senden des Datenpakets an die ermittelte Netzwerkadresse.

## Patentansprüche

1. Kommunikationsmodul zum Verbinden eines Beleuchtungs-Bussystems (1) mit einem auf einem Internetprotokoll basierenden Netzwerk (3), wobei
eine oder mehrere Komponenten (2a..2f) an das Bussystem (1) angekoppelt sind,
jeder an dem Bussystem (1) angekoppelten Komponente (2a..2f) eine eindeutige Busadresse zugeordnet ist,
zumindest eine in dem Bussystem (1) abfragbare Eigenschaft zumindest einer Komponente (2a..2f) eine über das Netzwerk (3) zugängliche Ressource darstellt,
dem Kommunikationsmodul (4) mehrere Netzwerkadressen zugeordnet sind, zumindest eine der mehreren Netzwerkadressen die Busadresse einer Komponente (2a..2f) enthält und
das Kommunikationsmodul (4) dazu ausgebildet ist, an die zumindest eine Netzwerkadresse gesendete Daten aus dem Netzwerk (3) zu empfangen, die Busadresse der Komponente (2a..2f) aus der Netzwerkadresse zu extrahieren, an die Komponente (2a..2f) mit der extrahierten Busadresse zu sendende Daten auf der Grundlage der Ressource und / oder den empfangenen Daten zu ermitteln und die ermittelten Daten an die Komponente (2a..2f) mit der extrahierten Busadresse über das Bussystem (1) zu übertragen, oder die von einer Komponente (2a..2f) autonom erzeugten und an das Kommunikationsmodul (4) gesendeten Daten über das Netzwerk (3) zumindest einem Netzteilnehmer zur Verfügung zu stellen, **dadurch gekennzeichnet, dass**
das Kommunikationsmodul dazu ausgebildet ist, die an dem Bussystem (1) angekoppelten Komponenten (2a..2f) automatisch zu erkennen und die von den erkannten Komponenten (2a..2f) bereitgestellten Eigenschaften mittels einer in einem Datenspeicher (12) hinterlegten Übersetzungs-Tabelle in Ressourcen zu übersetzen, die über das Netzwerk (3) zugänglich sind, um Daten der Komponenten (2a..2f) abzufragen oder Befehle an die Komponenten (2a..2f) zu senden, um somit die Konfiguration der Komponenten (2a..2f) zu ändern.

2. Kommunikationsmodul nach Anspruch 1, wobei
das Kommunikationsmodul (4) dazu ausgebildet ist, die Adresse der Komponente (2a..2f) aus dem Interface-Identifier der auf dem Internet Protocol Version 6 basierenden Netzwerkadresse, zu extrahieren.

3. Kommunikationsmodul nach Anspruch 2, wobei
in dem Bussystem mehrere Komponenten (2a..2f) mittels einer Gruppen-Busadresse adressierbar sind und das Kommunikationsmodul (4) dazu ausgebildet ist, die Gruppen-Busadresse auf der Grundlage einer in der Netzwerkadresse enthaltenen Multicast-Adresse zu ermitteln und eine Datenübertragung an die der ermittelten Gruppen-Busadresse zugehörigen Komponenten (2a..2f) auf der Grundlage der empfangenen Daten und / oder der Ressource durchzuführen.

4. Kommunikationsmodul nach einem der Ansprüche 1 bis 3, wobei
das Kommunikationsmodul (4) dazu ausgebildet ist, aus der Ressource der empfangenen Daten einen Steuerbefehl zu ermitteln und den ermittelten Steuerbefehl an die Komponente (2a..2f) mit der extrahierten Busadresse bzw. die Komponenten (2a..2f) mit der ermittelten Gruppen-Busadresse zu senden.

5. Kommunikationsmodul nach einem der Ansprüche 1 bis 4, wobei
das Kommunikationsmodul (4) dazu ausgebildet ist, als ein zumindest aus Sicht des Netzwerks (3) transparentes Gateway eine Umwandlung des Datenpaketformats der empfangenen Daten in das Datenpaketformat des Bussystems durchzuführen.

6. Kommunikationsmodul nach einem der Ansprüche 1 bis 5, wobei
zumindest eine in dem Bussystem abfragbare Eigenschaft zumindest einer Komponente (2a..2f) eine über das Netzwerk (3) zugängliche Ressource darstellt, die über einen URL erreichbar ist und
das Kommunikationsmodul (4) dazu ausgebildet ist, wenn die empfangenen Daten eine Anfrage der Ressource enthalten, die der angeforderten Ressource in der Übersetzungs-Tabelle zugeordnete Eigenschaft der Komponente (2a..2f) zu bestimmen und die Eigenschaft in einer Datenübertragung abzufragen.

7. Kommunikationsmodul nach Anspruch 6, wobei
das Kommunikationsmodul (4) dazu ausgebildet ist, ein Datenpaket mit von der Komponente empfangenen Informationen zu der abgefragten Eigenschaft zu erzeugen, eine Netzwerkadresse für die Übertragung des Datenpakets auf der Grundlage der empfangenen Daten zu ermitteln und das Datenpaket an die ermittelte Netzwerkadresse zu senden.

8. Kommunikationsmodul nach Anspruch 6 oder 7, wobei
jeder Komponente (2a..2f) mit zumindest einer abfragbaren Ressource eine Übersetzungs-Tabelle zugeordnet ist, welche der netzwerkseitig abfragbaren Ressource zumindest eine von der Komponente (2a..2f) abfragbare Eigenschaft zuordnet und das Kommunikationsmodul (4) dazu ausgebildet ist, für die abgefragte Ressource mittels der Übersetzungs-Tabelle die zumindest eine abzufragende Eigenschaft zu bestimmen.

9. Kommunikationsmodul nach Anspruch 6, 7 oder 8, wobei
das Bussystem (1) ein DALI-Bus ist,
zumindest eine Komponente (2a..2f) eine DALI-Event-Message über das Bussystem senden kann und
der DALI-Event-Message in der Übersetzungs-Tabelle als Ressource eine callback URL, an die die DALI-Event-Message weiterzuleiten ist, zugeordnet ist.

10. Kommunikationsmodul nach einem der Ansprüche 6 bis 9, wobei
das Kommunikationsmodul (4) dazu ausgebildet ist, zumindest eine von einer Komponente (2a..2f) zu einem bestimmten Ereignis an eine bestimmte Busadresse über das Bussystem (1) gesendete Nachricht zu detektieren, eine der bestimmten Busadresse, dem bestimmten Ereignis und/oder der Nachricht in einer Tabelle zugeordneten Netzwerkadresse zu bestimmen und die Nachricht an die bestimmte Netzwerkadresse zu senden.

11. Beleuchtungssystem mit einem Bussystem, mehreren an dem Bussystem (1) angekoppelten Komponenten (2a..2f) und dem Kommunikationsmodul (4) nach einem der Ansprüche 1 bis 10.

12. Beleuchtungssystem nach Anspruch 11, wobei das Bussystem (1) ein DALI-Bus ist.

13. Verfahren zum Übertragen von Daten zwischen zumindest einer an einem Beleuchtungs-Bussystem (1) angekoppelten Komponente (2a..2f) und einem Teilnehmer (5, 6) eines auf einem Internetprotokoll basierenden Netzwerks (3), wobei
das Bussystem (1) über eine Schnittstelle (4; 7..12) an das Netzwerk (3) angekoppelt ist,
jeder an dem Bussystem (1) angekoppelten Komponente (2a..2f) eine eindeutige Busadresse zugeordnet ist,
zumindest eine in dem Bussystem (1) abfragbare Eigenschaft zumindest einer Komponente (2a..2f) eine über das Netzwerk (3) zugängliche Ressource darstellt, der Schnittstelle mehrere Netzwerkadressen zugeordnet sind,
zumindest eine der mehreren Netzwerkadressen die Busadresse einer Komponente (2a..2f) enthält, und das Verfahren die Schritte aufweist:
Empfangen von aus dem Netzwerk an die zumindest eine Netzwerkadresse gesendeten Daten von der Schnittstelle (4; 7..12),
Extrahieren der Busadresse der Komponente (2a..2f) aus der Netzwerkadresse, Bestimmen der der Ressource zugeordneten Eigenschaft der Komponente mit Hilfe einer Übersetzungs-Tabelle,
Ermitteln von an die Komponente mit der extrahierten Busadresse zu sendenden Daten auf der Grundlage der empfangenen Daten und der Ressource, und Übertragen der ermittelten Daten an die Komponente mit der extrahierten Busadresse über das Bussystem,
**gekennzeichnet durch** die Schritte:
automatisches Erkennen der an dem Bussystem (1) angekoppelten Komponenten (2a..2f) durch die Schnittstelle (4; 7..12), und
Übersetzen der von den erkannten Komponenten (2a..2f) bereitgestellten Eigenschaften durch die Schnittstelle (4; 7..12) mittels der in einem Datenspeicher (12) hinterlegten Übersetzungs-Tabelle in Ressourcen, die über das Netzwerk (3) zugänglich sind, um Daten der Komponenten (2a..2f) abzufragen oder Befehle an die Komponenten (2a..2f) zu senden, um somit die Konfiguration der Komponenten (2a..2f) zu ändern.

14. Verfahren nach Anspruch 13, wobei
die über das Netzwerk (3) zugängliche Ressource über einen URL erreichbar ist, die empfangenen Daten eine Anfrage der Ressource von einem Netzteilnehmer (5, 6) enthalten, und das Verfahren zusätzlich die Schritte:
Bestimmen der der angeforderten Ressource in der Übersetzungstabelle zugeordneten Eigenschaft der Komponente (2a..2f),
Abfragen der bestimmten Eigenschaft in einer Datenübertragung an die Komponente (2a..2f),
Empfangen von Informationen zu der in der Datenübertragung abgefragten Eigenschaft von der Komponente (2a..2f),
Erzeugen eines Datenpakets mit den empfangenen Informationen, und Senden des Datenpakets an die Netzwerkadresse des Netzteilnehmers (5, 6).

## Claims

1. Communication module for connecting a lighting bus system (1) to a network (3) based on an internet protocol, wherein
one or more components (2a, ..., 2f) are coupled to the bus system (1),
a unique bus address is associated with each component (2a, ..., 2f) coupled to the bus system (1),
at least one property of at least one component (2a, ..., 2f), which property can be queried in the bus system (1), represents a resource accessible via the network (3),
a plurality of network addresses are associated with the communication module (4); at least one of the plurality of network addresses contains the bus address of a component (2a, ..., 2f), and
the communication module (4) is designed to receive from the network (3) data transmitted to the at least one network address; to extract the bus address of the component (2a, ..., 2f) from the network address; to determine data to be transmitted to the component (2a, ..., 2f) by means of the extracted bus address on the basis of the resource and/or the received data; and to transmit the determined data via the bus system (1) to the component (2a, ..., 2f) having the extracted bus address; or to provide the data generated autonomously by a component (2a, ..., 2f) and transmitted to the communication module (4) to at least one network subscriber via the network (3),
**characterized in that**
the communication module is designed to automatically recognize the components (2a, ..., 2f) coupled to the bus system (1), and to translate the properties provided by the recognized components (2a, ..., 2f) into resources by means of a translation table stored in a data storage (12), which resources are accessible via the network (3), in order to query data of the components (2a, ..., 2f) or to send commands to the components (2a, ..., 2f) in order to thus change the configuration of the components (2a, ..., 2f).

2. Communication module according to Claim 1, wherein
the communication module (4) is designed to extract the address of the component (2a, ..., 2f) from the interface identifier of the network address based on Internet Protocol Version 6.

3. Communication module according to Claim 2, wherein
in the bus system, a plurality of components (2a, ..., 2f) may be addressable by means of a group bus address, and the communication module (4) is designed to determine the group bus address on the basis of a multicast address contained in the network address, and to perform a data transmission to the components (2a, ..., 2f) associated with the determined group bus address on the basis of the received data and/or the resource.

4. Communication module according to any one of Claims 1 to 3, wherein
the communication module (4) is designed to determine a control command from the resource of the received data, and to transmit the determined control command to the component (2a, ..., 2f) together with the extracted bus address, or to the components (2a, ..., 2f) together with the determined group bus address.

5. Communication module according to any one of Claims 1 to 4, wherein
the communication module (4) is designed to perform a conversion of the data packet format of the received data into the data packet format of the bus system as a transparent gateway, at least from the viewpoint of the network (3).

6. Communication module according to any one of Claims 1 to 5, wherein
at least one property of at least one component (2a, ..., 2f), which property can be queried in the bus system, represents a resource accessible via the network (3), which resource can be reached via a URL, and,
when the received data contain a query of the resource, the communication module (4) is designed to determine the property of the component (2a, ..., 2f) associated with the requested resource in the translation table, and to query the property in a data transmission.

7. Communication module according to Claim 6, wherein
the communication module (4) is designed to generate a data packet having information received from the component regarding the queried property, to determine a network address for the transmission of the data packet based on the received data, and to transmit the data packet to the determined network address.

8. Communication module according to Claims 6 or 7, wherein
a translation table is associated with each component (2a, ..., 2f) having at least one queryable resource, which translation table associates at least one property that can be queried by the component (2a, ..., 2f) with the resource which can be queried on the network side, and the communication module (4) is designed to determine the at least one property to be queried for the queried resource by means of the translation table.

9. Communication module according to Claims 6, 7, or 8, wherein
the bus system (1) is a DALI bus,
at least one component (2a, ..., 2f) may transmit a DALI event message via the bus system, and
a callback URL to which the DALI event message is to be forwarded is associated as a resource with said DALI event message in the translation table.

10. Communication module according to any one of Claims 6 to 9, wherein
the communication module (4) is designed to detect at least one message transmitted by a component (2a, ..., 2f) to a specific bus address via the bus system (1) regarding a specific event; to determine a network address associated in a table with the specific bus address, the specific event, and/or the message; and to transmit the message to the specific network address.

11. Lighting system having a bus system, a plurality of components (2a, ..., 2f) coupled to the bus system (1), and the communication module (4) according to any one of Claims 1 to 10.

12. Lighting system according to Claim 11, wherein the bus system (1) is a DALI bus.

13. Method for transmitting data between at least one component (2a, ..., 2f) coupled to a lighting bus system (1) and a subscriber (5, 6) of a network (3), based on an internet protocol, wherein
the bus system (1) is coupled to the network (3) via an interface (4; 7, ..., 12),
a unique bus address is associated with each component (2a, ..., 2f) coupled to the bus system (1),
at least one property of at least one component (2a, ..., 2f), which property can be queried in the bus system (1), represents a resource accessible via the network (3); a plurality of network addresses are associated with the interface,
at least one of the plurality of network addresses contains the bus address of a component (2a, ..., 2f), and the method comprises the steps of:
receiving from the interface (4; 7, ..., 12) data transmitted from the network to the at least one network address,
extracting the bus address of the component (2a, ..., 2f) from the network address, determining the property of the component associated with the resource by means of a translation table,
determining data to be sent to the component with the extracted bus address on the basis of the received data and the resource, and transmitting the determined data to the component with the extracted bus address via the bus system, **characterized by** the steps of:
automatically recognizing the components (2a, ..., 2f) coupled to the bus system (1) via the interface (4; 7, ..., 12), and
translating the properties provided by the recognized components (2a, ..., 2f) via the interface (4; 7, ..., 12) by means of the translation table stored in a data store (12) into resources accessible via the network (3) in order to query data of the components (2a, ..., 2f), or to send commands to the components (2a, ..., 2f), in order to thus change the configuration of the components (2a, ..., 2f).

14. Method according to Claim 13, wherein
the resource accessible via the network (3) can be reached via a URL, the received data contain a query of the resource by a network subscriber (5, 6), and the method additionally comprises the steps of:
determining the property of the component (2a, ..., 2f) that is associated with the requested resource in the translation table,
querying the determined property in a data transmission to the component (2a, ..., 2f),
receiving from the component (2a, ..., 2f) information regarding the property queried in the data transmission,
generating a data packet with the received information, and transmitting the data packet to the network address of the network subscriber (5, 6).

## Revendications

1. Module de communication servant à relier un système de bus d'éclairage (1) à un réseau (3) à base de protocoles Internet, dans lequel
un ou plusieurs composants (2a..2f) sont couplés au système de bus (1),
une adresse de bus univoque est attribuée à chaque composant (2a..2f) couplé au système de bus (1),
au moins une propriété pouvant être appelée d'au moins un composant (2a..2f) dans le système de bus (1) représente une ressource accessible par le biais du réseau (3),
plusieurs adresses de réseau sont attribuées au module de communication (4), au moins une des plusieurs adresses de réseau contient l'adresse de bus d'un composant (2a..2f) et
le module de communication (4) est conçu pour recevoir du réseau (3) des données envoyées à la ou aux adresses de réseau, pour extraire de l'adresse de réseau l'adresse de bus du composant (2a..2f), pour déterminer des données à envoyer au composant (2a..2f) ayant l'adresse de bus extraite sur la base des ressources et/ou des données reçues et pour transmettre, par le biais du système de bus (1), les données déterminées au composant (2a..2f) ou pour fournir les données générées de manière autonome par un composant (2a..2f) et envoyées au module de communication (4) par le biais du réseau (3) à au moins un abonné du réseau,
**caractérisé en ce que**
le module de communication est conçu pour reconnaître automatiquement les composants (2a..2f) couplés au système de bus (1) et traduire les propriétés fournies par les composants (2a..2f) reconnus au moyen d'un tableau de traduction consigné dans une mémoire de données (12) en ressources, qui sont accessibles par le biais du réseau (3), afin d'appeler les données des composants (2a..2f) ou d'envoyer des ordres aux composants (2a..2f), afin de modifier ainsi la configuration des composants (2a..2f).

2. Module de communication selon la revendication 1, dans lequel
le module de communication (4) est conçu pour extraire les adresses du composant (2a..2f) de l'identifiant d'interface de l'adresse de réseau basée sur la version de Protocole Internet 6.

3. Module de communication selon la revendication 2, dans lequel
plusieurs composants (2a..2f) dans le système de bus peuvent être adressés au moyen d'une adresse de bus de groupe et le module de communication (4) est conçu pour déterminer l'adresse de bus de groupe sur la base d'une adresse de multidiffusion contenue dans l'adresse de réseau et pour réaliser une transmission de données aux composants (2a..2f) appartenant à l'adresse de bus de groupe déterminée sur la base des données reçues et/ou des ressources.

4. Module de communication selon l'une quelconque des revendications 1 à 3, dans lequel
le module de communication (4) est conçu pour déterminer, à partir des ressources des données reçues, un ordre de commande et pour envoyer l'ordre de commande déterminé au composant (2a..2f) ayant l'adresse de bus extraite ou aux composants (2a..2f) ayant l'adresse de bus de groupe déterminée.

5. Module de communication selon l'une quelconque des revendications 1 à 4, dans lequel
le module de communication (4) est conçu pour réaliser, sous forme d'une passerelle transparente au moins de la perspective du réseau (3), une conversion du format de paquet de données des données reçues au format de paquet de données du système de bus.

6. Module de communication selon l'une quelconque des revendications 1 à 5, dans lequel
au moins une propriété pouvant être appelée d'au moins un composant (2a..2f) dans le système de bus représente une ressource accessible par le biais du réseau (3), qui peut être atteinte par une URL et
le module de communication (4) est conçu pour, lorsque les données reçues contiennent une demande de la ressource, déterminer la propriété du composant (2a..2f) attribuée à la ressource demandée dans le tableau de traduction et pour appeler la propriété dans une transmission de données.

7. Module de communication selon la revendication 6, dans lequel
le module de communication (4) est conçu pour générer un paquet de données avec les informations reçues par le composant concernant la propriété appelée, pour déterminer une adresse de réseau pour la transmission du paquet de données sur la base des données reçues et pour envoyer le paquet de données à l'adresse de réseau déterminée.

8. Module de communication selon la revendication 6 ou 7, dans lequel
à chaque composant (2a..2f) ayant au moins une ressource pouvant être appelée est attribué un tableau de traduction, qui attribue à la ressource pouvant être appelée côté réseau au moins une propriété pouvant être appelée par le composant (2a..2f) et le module de communication (4) est conçu pour déterminer, pour la ressource appelée, au moyen du tableau de traduction, la au moins une propriété à appeler.

9. Module de communication selon la revendication 6, 7 ou 8, dans lequel
le système de bus (1) est un bus DALI,
au moins un composant (2a..2f) peut envoyer un message d'événement DALI par le biais du système de bus et
une URL de rappel est attribuée au message d'événement DALI dans le tableau de traduction sous forme de ressource, auquel le message d'événement de DALI peut être transféré.

10. Module de communication selon l'une quelconque des revendications 6 à 9, dans lequel
le module de communication (4) est conçu pour détecter au moins un message envoyé par un composant (2a..2f) à une destination déterminée au niveau d'une adresse de bus déterminée par le biais du système de bus (1), pour déterminer une adresse de réseau attribuée à l'adresse de bus déterminée, la destination déterminée et/ou le message dans un tableau et pour envoyer le message à l'adresse de réseau déterminée.

11. Système d'éclairage comprenant un système de bus, plusieurs composants (2a..2f) couplés au système de bus (1) et le module de communication (4) selon l'une quelconque des revendications 1 à 10.

12. Système d'éclairage selon la revendication 11, dans lequel le système de bus (1) est un bus DALI.

13. Procédé de transmission de données entre au moins un composant (2a..2f) couplé à un système de bus (1) d'éclairage et un abonné (5, 6) d'un réseau (3) à base de protocoles Internet, dans lequel
le système de bus (1) est couplé au réseau (3) par le biais d'une interface (4 ; 7..12),
une adresse de bus univoque est attribuée à chaque composant (2a..2f) couplé au système de bus (1),
au moins une propriété pouvant être appelée d'au moins un composant (2a..2f) dans le système de bus (1) représente une ressource accessible par le biais du réseau (3), plusieurs adresses de réseau sont attribuées à l'interface,
au moins une des plusieurs adresses de réseau contient l'adresse de bus d'un composant (2a..2f) et le procédé comporte les étapes :
de réception de données envoyées du réseau à la au moins une adresse de réseau depuis l'interface (4 ; 7..12),
d'extraction de l'adresse de bus du composant (2a..2f) à partir de l'adresse de réseau, de détermination de la propriété du composant attribuée à la ressource à l'aide d'un tableau de traduction,
de détermination des données à envoyer au composant ayant l'adresse de bus extraite sur la base des données reçues et de la ressource et de transmission des données déterminées au composant ayant l'adresse de bus extraite par le biais du système de bus,
**caractérisé par** les étapes :
de reconnaissance automatique du composant (2a..2f) couplé au système de bus (1) par le biais de l'interface (4 ; 7..12) et
de traduction des propriétés fournies par les composants (2a..2f) reconnus par le biais de l'interface (4 ; 7, 12) au moyen du tableau de traduction consigné dans une mémoire de données (12) en ressources, qui sont accessibles par le biais du réseau (3), afin d'appeler les données des composants (2a..2f) ou d'envoyer des ordres aux composants (2a..2f), afin de modifier ainsi la configuration des composants (2a..2f).

14. Procédé selon la revendication 13, dans lequel
la ressource accessible par le biais du réseau (3) peut être atteinte par le biais d'une URL, les données reçues contiennent une demande de la ressource par un abonné du réseau (5, 6) et le procédé comprend en outre les étapes :
de détermination de la propriété du composant (2a..2f) attribuée à la ressource demandée dans le tableau de traduction,
d'appel de la propriété déterminée dans une transmission de données au composant (2a..2f),
de réception d'informations sur la propriété appelée dans la transmission de données par le composant (2a..2f),
de génération d'un paquet de données avec les informations reçues et
d'envoi du paquet de données à une adresse de réseau de l'abonné du réseau (5, 6).
